# EUROPEAN PATENT SPECIFICATION

(11) **EP 0 594 118 B1**
(45) Date of publication and mention of the grant of the patent: **02.01.2003**
(21) Application number: 93116855.3
(22) Date of filing: 19.10.1993
(51) Int. Cl.: G11B 17/22, G11B 23/03, G11B 17/04, G11B 33/08

(54) **Recording and playback unit**
Aufzeichnungs- und Wiedergabegerät
Appareil d'enregistrement et de reproduction

(30) Priority: 19.10.1992 JP 28005292; 09.12.1992 JP 32968892; 09.12.1992 JP 32969492; 09.12.1992 JP 32967892; 09.12.1992 JP 32969092
(43) Date of publication of application: 27.04.1994
(60) Divisional application: 96117575.9
(73) Proprietor: CLARION Co., Ltd., Tokyo (JP)
(72) Inventor: Handa,Hiroto, Tokyo (JP); Muramatu,Hidenori, Tokyo (JP); Kanno,Satosi, Tokyo (JP)
(74) Representative: Schuhmann, Albrecht

(56) References cited:
- EP-A- 0 066 317
- EP-A- 0 143 442
- EP-A- 0 206 831
- EP-A- 0 212 500
- EP-A- 0 284 815
- EP-A- 0 305 035
- DE-A- 3 337 347
- DE-A- 3 930 953
- US-A- 4 497 051
- US-A- 4 841 499
- US-A- 5 025 338
- US-A- 5 123 001

## Description

### BACKGROUND OF THE INVENTION

This invention relates to a recording and playback unit for recording information on a recording medium and for reproducing information recorded on the recording medium, and more particularly relates to a recording and playback unit which is constructed in such a way that several recording media can be efficiently accommodated in a small space and which has conveying mechanisms which reliably convey the recording media to the part of the unit where recording and playback are performed.

The Compact Disc (hereinafter referred to as the 'CD') is a widely known recording medium on which information is prerecorded. Recently, 'CD autochanger' systems for cars, in which a CD player unit provided with a magazine device which can be loaded with several CDs is installed in the trunk of a car, and a main unit, called the 'head unit', is positioned near the driver's seat, have been becoming popular. With this kind of system the driver can, using the main unit, select any of the CDs loaded in the magazine device in the player unit in the trunk of the car, and can have the player unit replay the information recorded on the CD, for example, music, without leaving the driver's seat.

Another recording medium that has been developed in recent years is the Mini Disc cartridge (hereinafter referred to as the 'MD'), which consists of an optical disc or a magneto-optical disc contained in a protective cartridge case. With the MD it is possible not only to replay prerecorded information but also to newly record information and to erase and record over information already recorded.

Among others, the following features are sought in recording and playback units which are loaded with and carry out information recording and playback operations on these recording media: the recording media must be reliably conveyed to the player part of the unit; and the unit should be constructed in such a way that the space inside the unit is used efficiently, so that as many of the recording media as possible can be stocked in the unit at once.

The document EP-A-0 212 500 discloses a front loading apparatus for a disc drive unit where a disc cartridge is conveyed through guide channels into the unit, whereby the disc cartridge is being driven by rollers, which touch the disc cartridge with a predetermined pressure.

The object of the present invention is to provide a recording and playback unit in which the recording media are reliably conveyed to the player part of the unit and which is constructed in such a way that the space inside the device is used efficiently so that as many of the recording media as possible can be stocked in the device at once.

For this purpose, according to the present invention, there is provided a cartridge holder comprising: a guide for holding a disc cartridge in such way that the disc cartridge can be conveyed in a fixed conveyance direction, the disc cartridge containing a disc for performing a desired function and the disc cartridge being provided with an access opening through which the disc can be accessed for the purpose of executing said function and a slide shutter for covering the access opening; and a roller for conveying the disc cartridge in said fixed conveyance direction, wherein the roller is positioned in such a way that it does not make contact with the slide shutter.

According to the present invention the roller comprises a plurality of roller units and is oriented perpendicular to said conveyance direction and is positioned asymmetrically on the disc cartridge; the pushing force exerted by the roller units on a surface of the disc cartridge voices in a direction perpendicular to the conveyance direction.

According to an embodiment of the invention the roller is mounted on a roller shaft and at least two spring members, at least one spring member being mounted at each end of the roller shaft, which urge the roller shaft toward the disc cartridge, wherein the spring force of the spring member on the side nearer the shutter is different than the spring force of the spring member on the side farther from the shutter, and as a result the pushing force exerted by the roller on the surface of the disc cartridge varies in a direction perpendicular to the conveyance direction.

According to another embodiment of the invention the diameter of the roller is different on the side nearer the shutter than it is on the side farther from the shutter, and as a result the pushing force exerted by the roller on the surface of the disc cartridge varies in a direction perpendicular to the conveyance direction. Said disc for performing a desired function is a disc chosen from a group comprising optical discs and magnetooptical discs on which data can be stored.

Alternative solutions will be discussed hereinafter.

### BRIEF DESCRIPTION OF THE DRAWINGS

FIG. 1 is a plan view illustrating the construction of a typical MD;
FIG. 2 is a block diagram of an MD autochanger unit, constructed in accordance with a preferred embodiment of the present invention, for installation in a car;
FIG. 3 is a cross-sectional side elevation view of an autochanger unit constructed in accordance with the preferred embodiment of FIG. 2, and illustrates the positions of the main internal parts of the autochanger unit during disc insertion;
FIG. 4 is a plan view of the front panel of the car autochanger unit of FIG.3;
FIG. 5 is a plan view illustrating the construction of the cartridge holder shown in FIG.3;
FIG. 6 is a side elevation view of the cartridge holder;
FIG. 7 is a plan view of a disc pull-in mechanism and a disc eject mechanism used in the stocker shown in FIG. 3, and illustrates the state of a stocker disc compartment during disc insertion and ejection;
FIG. 8 is a plan view of the disc pull-in and eject mechanisms of FIG. 7, and illustrates the state of a stocker disc compartment with a disc fully loaded into it.

### DESCRIPTION OF THE PREFERRED EMBODIMENT

An MD autochanger unit for installation in a car (hereinafter referred to simply as 'the MD unit') will now be described, with reference to the accompanying drawings, as a preferred embodiment of a recording and playback unit according to the present invention.

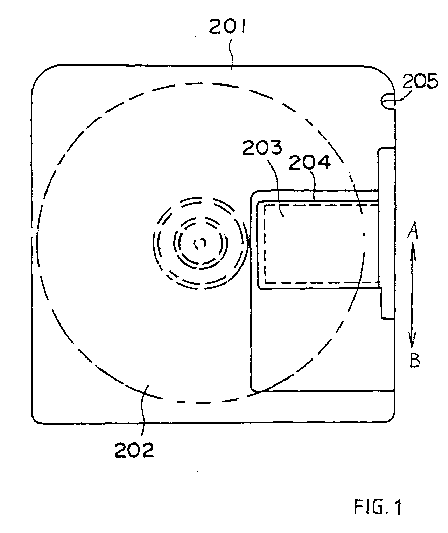

This MD unit is an MD player which performs information playback operations or information recording operations on MDs loaded into it. First, a typical MD of the kind used by the MD unit will be described. FIG. 1 is a plan view showing the construction of a typical MD wherein; reference numeral 201 denotes a cartridge case for housing the disc, and reference numeral 202 denotes a 6 cm diameter optical or magneto-optical disc for information recording, contained in the cartridge case 201. An access window 203 is provided in the cartridge case 201, and the disc 202 is accessed through this window for information playback or recording, reference numeral 204 denotes a slide shutter which is mounted on the cartridge case 201 in such a way that it opens and closes the access window 203 by sliding in the directions indicated by the arrows A and B in FIG. 1, and reference numeral 205 denotes an engaging notch which comes into use when the MD is loaded into certain holding positions inside the MD unit. Because the slide shutter 204 is closed at all times other than when the disc is being accessed, the disc 202 is protected from the outside thereby making the MD a very practical and durable medium.

There are two different types of MD: the pre-mastered (pre-m) read-only type, which has information prerecorded on it and is for playback of this information only; and the recordable type, which can be written on. The pre-mastered type has an access window, to allow access by a laser pickup only on the side of the cartridge case that faces the turntable onto which the disc is loaded for playing, and this access window is opened and closed by the slide shutter 204. The recordable type, on the other hand, has a window not just on the turntable side but also on its other side, and a magnetic head for information recording accesses and abuts with the disc 202 through this other window. Both these windows are opened and closed by the shutter 204.

In the description that follows, except where they are named explicitly, both the cartridge case 201 and the disc itself 202 will be referred to as 'the disc'. It should also be noted that although the preferred embodiment below is described with reference only to the pre-mastered type of disc, it is applicable to the recordable type of disc as well.

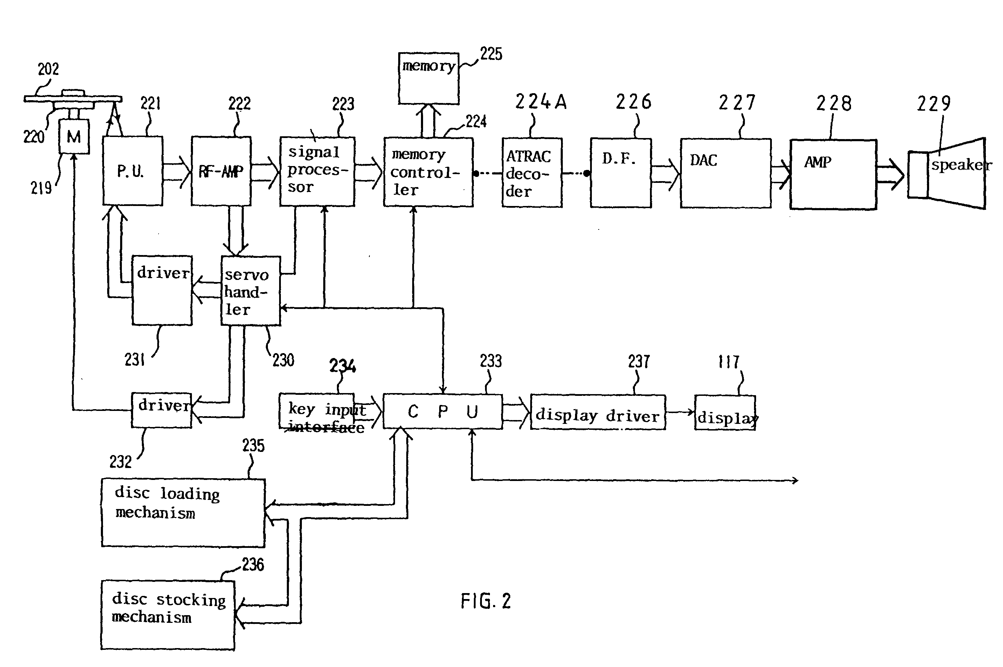

The control sections and the signal processing sections of the MD unit will now be described, with reference to FIG. 2.

In FIG. 2, reference numeral 219 denotes a spindle motor for rotating the disc, reference numeral 220 denotes a turntable for supporting the disc on the motor, and reference numeral 221 designates a pickup which applies light onto the disc and reads information recorded on the disc by picking up the reflected light.

A display 117 is an LCD display which is so constructed as to display characters long, and can display letters, symbols and numerals in 15 figures at the maximum, for example.

An RF amplifier 222 amplifies the high frequency signal outputted by the pickup 221, and a signal processor 223 carries out prescribed signal processing on the signal outputted by the RF amplifier. A memory controller 224 writes data received from the signal processor 223 into a memory 225, and also reads data from the memory 225. A compressed signal expanding means (an ATRAC decoder) 224A expands the signal that has been read from the disc, according to a prescribed sequence. A digital filter 226 makes various acoustic corrections, a D/A converter 227 converts the sound data from a digital signal into an analog signal, an audio amplifier 228 amplifies this analog sound signal, and a speaker 229 makes sounds according to this sound signal.

A servo handler 230 receives the readout synchronization signal component from the RF amplifier, and other signals, and generates drive control signals. A driver 231 generates drive signals for driving a laser light generator, a tracking actuator, and a focus actuator (none of which are shown in FIG.2), mounted inside the pickup 221, according to drive control signals it receives from the servo handler 230. A driver 232 generates drive signals for driving mechanical drive mechanisms such as the spindle motor 219 according to drive signals it receives from the servo handler 230.

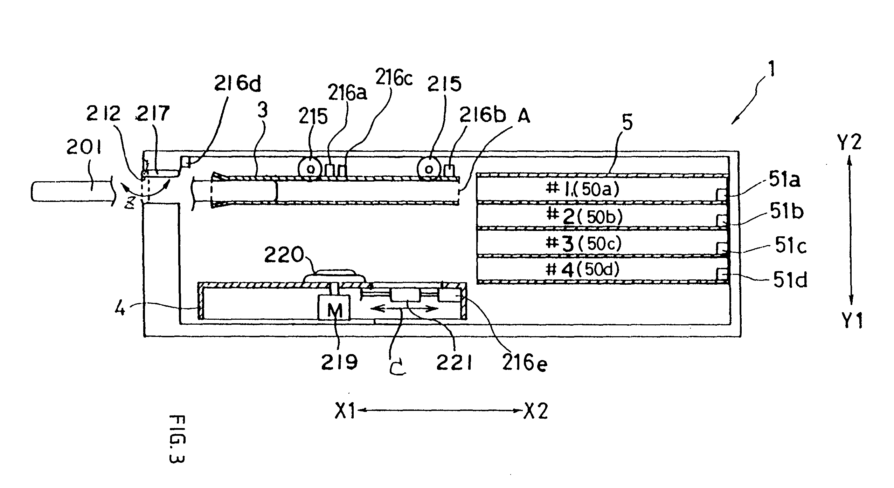

Reference numeral 233 denotes a CPU, which serves as a control means for controlling the unit and for communicating with the head unit (not shown). A key input interface 234 receives input from keys mounted in the front panel, shown in FIG.3, and supplies this input data to the CPU 233. A disc loading mechanism 235, controlled by the CPU 233, controls the movement of the disc cartridge holder, which is made up of various sensors and actuators and will be further described hereinafter. A disc stocking mechanism 236, also controlled by the CPU 233, controls the movement of a stocker 5, which is made up of stocking completion sensors and actuators and the like. A display driver 237 drives the display 117 based on display data outputted by the CPU 233. It is noted here that although in this preferred embodiment the invention is applied to a playback-only system, if a magnetic head was provided, the system would of course be capable of recording on the discs, too.

The operation of the MD unit will now be explained.
In the drawings, the arrows X1 and X2 indicate the front-rear direction in the MD unit, and the arrows Y1 and Y2 indicate the up-down direction in the MD unit. Accordingly, the side toward which the arrows X1 point will be called the front side, the side toward which the arrows X2 point will be called the rear side, the side toward which the arrows Y1 point will be called the lower side, and the side toward which the arrows Y2 point will be called the upper side.

FIG. 3 is a cross-sectional view of the MD unit, and shows the positions of the internals of the MD unit during disc insertion. The MD unit consists of a number of main parts, which will be described below, mounted inside a cuboid case 1. A loading slot 212 for loading discs is formed in the front of the case 1 near the top of the case 1, and a door 217 for preventing extraneous matter from getting inside the MD unit is mounted in the loading slot 212 in such a way that it is free to pivot in the direction indicated by the arrow Z so that it opens and closes the loading slot 212.

The main parts of the MD unit, mounted inside the case 1, are: a cartridge holder 3, which loads itself with either a disc inserted through the loading slot 212 or a disc from the stocker 5, holds the disc, and then either loads the disc into the stocker 5 or ejects the disc through the loading slot 212; a player 4, which rotates a disc held in the cartridge holder 3; and a stocker 5, which holds discs.

The cartridge holder 3 is positioned behind the loading slot 212 and is mounted on an elevator mechanism, not shown in FIG.3, by which it can be moved up and down inside the case 1; a pair of rollers 215, which will be discussed hereinafter, for moving the disc in the X1-X2 direction, in order to load a disc inserted through the loading slot onto the cartridge holder or in order to load a disc from the cartridge holder into the stocker 5 or in order to eject a disc from the cartridge holder out through the loading slot 212, are rotatably mounted on the top part of the cartridge holder 3.

Various sensors, for detecting the position of the disc on insertion, while loaded on the cartridge holder, and on ejection, are also mounted on the cartridge holder 3. These sensors include: a disc insertion sensor 216a, which detects that a disc has been inserted; a loading completion sensor 216b, which detects that a disc is fully loaded onto the cartridge holder; an ejection sensor 216c, which detects that a disc has been ejected; and a disc removal sensor 216d, which detects that the disc has been removed from the MD unit.

The loading completion sensor 216b detects that a disc is fully loaded onto the cartridge holder 3 by sensing that the end of a disc which has been inserted through the loading slot 212 and has been loaded onto the cartridge holder 3 by the roller 215 has reached the position A in FIG.3, i.e. the end of the cartridge holder 3. The eject sensor 216c detects that a disc has been ejected from the cartridge holder 3 as far as a position from which it can be taken out of the unit; this position will be called the reload position. The disc removal sensor 216d is mounted near the loading slot 212 and detects that a disc which has been ejected from the cartridge holder 3 to the loading slot 212, i.e. a disc which has been moved into the reload position, has been removed from the MD unit.

The player 4 is positioned underneath the cartridge holder 3 and facing the cartridge holder 3, and the player 4 is mounted on dampers and anti-vibration springs in such a way that when the disc is being rotated the player 4 is in a state in which it is floating on these dampers and anti-vibration springs so that any vibrations originating outside the unit that the case 1 might undergo are prevented from being transmitted to the player 4. At all times other than when a disc is being rotated on it, the player 4 is immovably fixed to the case 1.

The rotary drive spindle motor 219, the turntable 220 on which the disc is placed, and the pickup 221 which shines a beam of light onto the disc and reads information from the disc, which were mentioned above with reference to FIG.2, are mounted on the player 4, and the pickup 221 is mounted in such a way that it can slide radially with respect to a disc placed on the turntable 220, i.e. in the direction indicated by the arrow C in FIG.3. Also mounted on the player 4 is a disc placement completion sensor 216e, which is a recording medium detector means which by sensing the presence of the cartridge case 201 detects that a disc is in place on the turntable 220.

The stocker 5 is a case made up of several disc holding compartments arranged in a vertical stack, and in this preferred embodiment the stocker 5 has four disc compartments, 50a-50d; it is positioned behind the cartridge holder 30, as seen from the loading slot 212, and is mounted in such a way that it can move up and down. The compartments 50a-50d are identified by numbers #1-#4, with compartment 50a being #1, compartment 50b being #2, compartment 50c being #3, and compartment 50d being #4.

Each of the compartments 50a-50d has an opening at the front through which a disc can be inserted, and behind the opening is a space in which a disc can be accommodated horizontally. Each of the compartments is also provided with a stocking completion sensor 51a-51d, which detects that a disc has been inserted all the way into the respective compartment, and a pull-in mechanism and an eject mechanism, not shown in FIG.3, which respectively are for pulling discs into the compartment and ejecting discs from the compartment. A front panel provided with input functions, for inputting instructions from the user into the unit, and information display functions, is mounted on the front of the case 1.

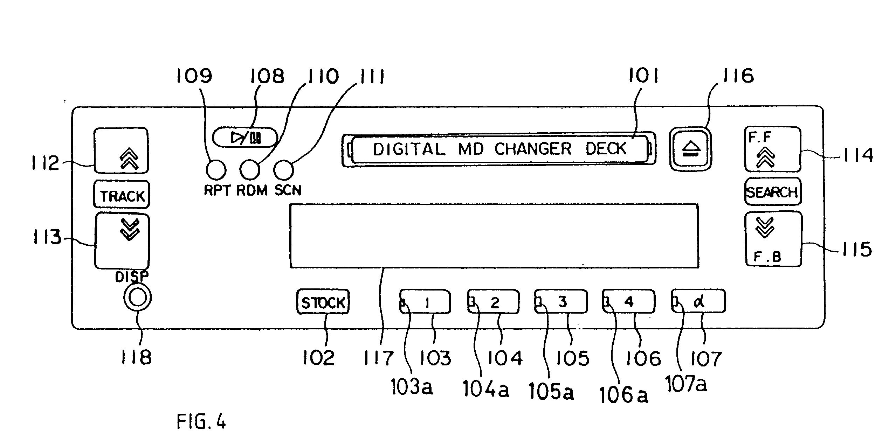

FIG. 4 is a plan view of this front panel. In FIG. 4, reference numeral 102 denotes a stock key which inputs into the unit a stocking instruction telling the unit to stock a disc that has been inserted through the loading slot 212 into the stocker 5. Keys 103 through 106 are MD designation keys (hereinafter called No. keys) for selecting a desired disc out of four discs held in the stocker compartments 50a-50d and for designation in which of the four compartments 50a-50d a disc is to be stocked; the numerals 1 to 4 on the key faces correspond to the identification numbers #1 to #4 which are assigned to the compartments of the stocker 5 as was described above with reference to FIG.3. Key 107 is a standby MD designation key α (hereinafter called the α key), and a disc inserted through the loading slot 212 after this key is depressed is loaded straight onto the turntable 220, without being stocked in any of the compartments 50a-50d. Until this disc is ejected, the MD unit functions as a single-MD player; even if there are discs stocked in the compartments 50a-50d, these discs will not be accessed. The keys 103-107 are provided with LED indicators (hereinafter called No. lamps) 103a-107a respectively, and when a disc is inserted after a No. key or the α key is depressed, the corresponding indicator lights up.

Key 108 is a play/pause key for inputting into the unit a play instruction when a disc is to be played; when this key is depressed at a time other than when a disc is already being played, the unit goes into the play mode. When the play/pause key 108 is depressed while a disc is being played, the unit goes into the pause mode or the stop mode. Keys 109 through 111 are for setting the unit into special play modes: an RPT key 109 puts the unit into a repeat play mode in which the disc is played repeatedly; an RDM key 110 puts the unit into a random play mode in which the discs and/or the tracks on a disc are played randomly; and an SCN key 111 puts the unit into a scanning play mode in which the first parts only of the tracks are played, one after another.

Key 112 instructs the unit to play the previous track, and key 113 instructs the unit to play the next track. Keys 114 and 115 respectively are fast-forward and fast-backward keys; depressing these keys while the unit is in the play mode enables the user to search for a desired passage manually, by so-called cue and review. Key 116 is an eject key which instructs the unit to eject a disc. Reference numeral 117 denotes an LCD display, discussed above with reference to FIG.2, which displays the operating state of the MD unit and can display letters, symbols and figures up to a maximum of for example 15 characters.

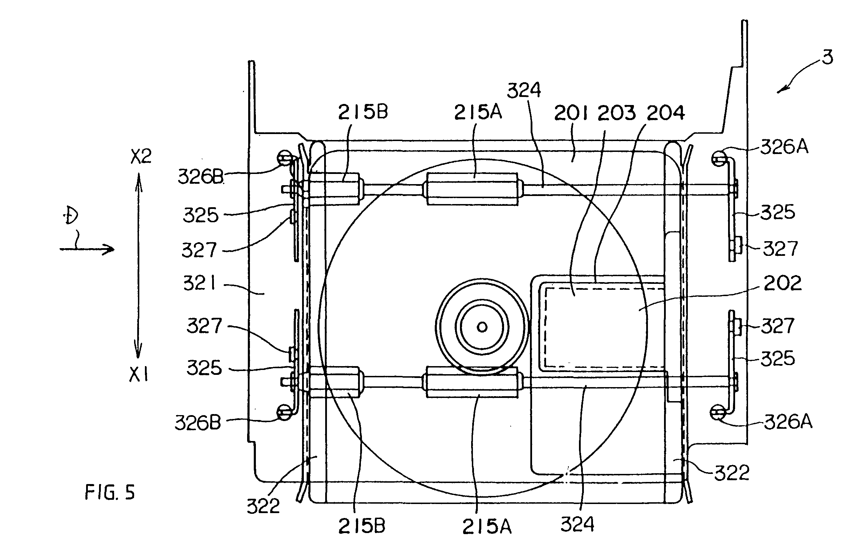

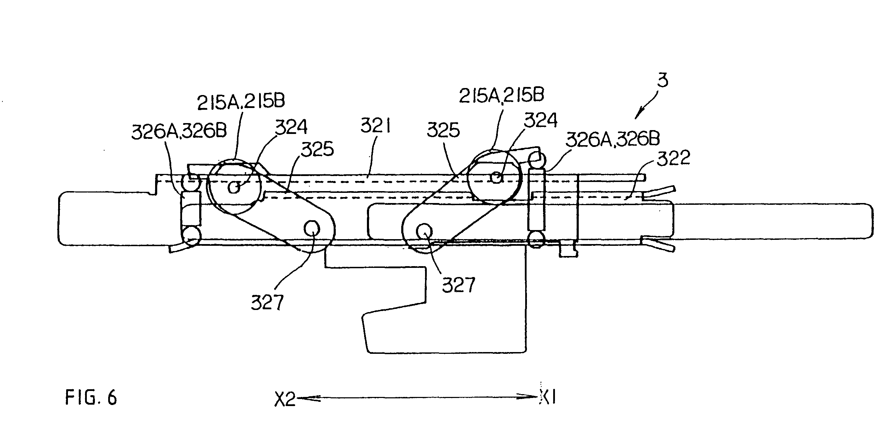

The cartridge holder 3 will now be described in more detail, with reference to FIGS. 5 and 6. FIG. 5 is a plan view showing the construction of the cartridge holder 3, and FIG. 6 is a side elevation view of the cartridge holder 3 as seen from the direction indicated by the arrow D in FIG. 5.

As shown in FIG. 5, the cartridge holder 3 is provided with: a holder chassis (hereinafter called the chassis) 321; two guides 322, which are mounted on the underside of the chassis 321 and which hold the disc in such a way that it is movable in the front-rear direction, i.e. in the direction indicated by the arrow X1-X2; and a pair of rollers 215, which each consist of two rollers 215A and 215B and which move the disc in the front-rear direction. The disc is inserted onto the cartridge holder in such a way that the slide shutter 204 is at the side of the cartridge holder 3. When there is no particular need to name them explicitly, the rollers 215A and 215B will for convenience be referred to simply as the rollers 215. These rollers 215A and 215B are mounted on two roller shafts 324, as shown in FIGS. 5 and 6, and are fitted to the roller shafts 324 in such a way that they each roll integrally with the roller shaft 324 on which they are mounted. The roller shafts 324 are rotatably mounted on the chassis 321, parallel to each other and oriented in the left-right direction. The rollers 215A and 215B thus mounted on the roller shafts 324 are mounted asymmetrically with respect to the disc, in such a way that they do not make contact with the slide shutter 204 when it slides.

The ends of each of the roller shafts 324 are supported by the ends of a pair of support arms 325 mounted on the sides of the chassis 321, and the support arms 325 are each pivotally mounted on a pivot support 327. The roller shafts 324 are therefore free to move up and down above the chassis 321. Also, the support arms 325 are pulled down toward the disc by coil springs 326A and 326B, so that when there is a disc on the cartridge holder the rollers 215A and 215B make contact with the upper surface of the disc and hold the disc down onto the lower plate of the cartridge holder 3, which is the lower disc holding surface. In this way stable disc transport is ensured. Also mounted on the cartridge holder 3, but not shown in the drawings, are a roller drive mechanism for rotating the rollers 215A and 215B, and a shutter opening mechanism for opening the slide shutter 204.

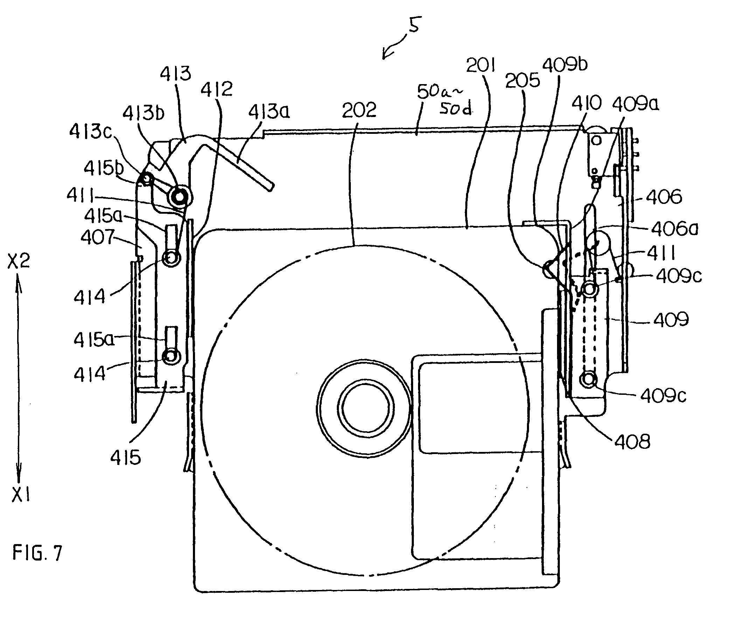

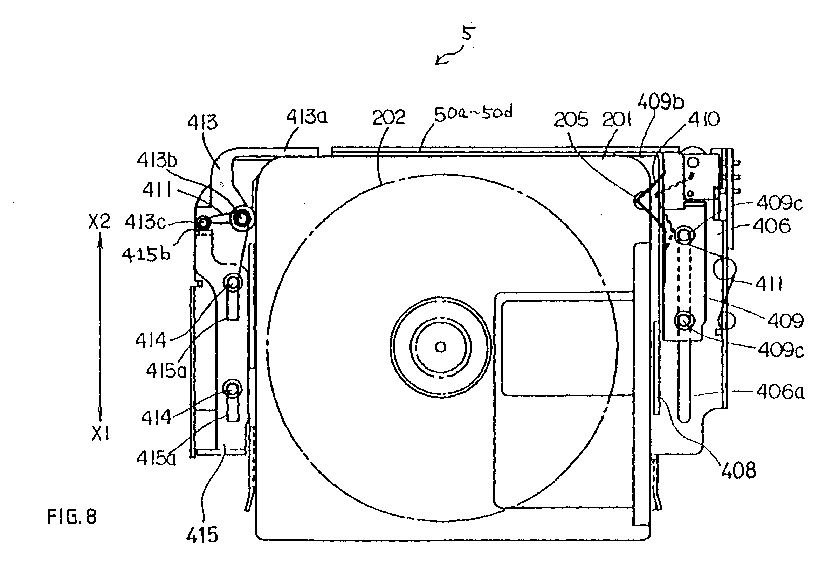

Next, the disc pull-in and eject mechanisms mounted in the stocker 5, for pulling discs into and ejecting discs from the stocker 5, will be described, with reference to FIGS.7 and 8. FIG.7 is a plan view illustrating any of the compartments 50a-50d of the stocker 5 as a disc is being pulled into, or ejected from, the compartment; and FIG.8 is a plan view illustrating any of the compartments 50a-50d of the stocker with a disc stocked in it.

As shown in FIG.7, the compartments 50a-50d of the stocker 5 are each provided with a right side support surface 406 and a left side support surface 407, which project out from beneath the disc on the right and left sides of the drawing. The disc is inserted by the cartridge holder 3 through the front of the stocker 5 in the direction indicated by the arrow X2. A disc pull-in mechanism for pulling in a disc inserted into the stocker 5 by the cartridge holder 3 is mounted on the right side support surface 406, and a disc eject mechanism for ejecting a disc from inside the stocker 5 out to the cartridge holder 3 is mounted on the left side support surface 407.

First the disc pull-in mechanism will be described. A first plate-form guide part 408 is mounted between the stocker 5 and the right side support surface 406, as shown in FIG.7, and is perpendicular to the stocker 5, i.e. vertical. The right side support surface 406 is provided with a long, narrow guide slot 406a, oriented parallel to the first guide part 408, i.e. oriented in the front-rear direction. Also, a rectangular holding plate 409 is mounted on the right side support surface 406 in such a way that it can slide in the front-rear direction.

An L-shaped support part 409a is mounted on the left side of this holding plate 409 and makes contact with the first guide part 408. The end of the support part 409a forms an abutting portion 409b which projects into the stocker 5, and the front surface of this abutting portion 409b abuts with the rear edge of the disc. A holding spring 410, consisting of a plate spring provided with an elbow-shaped bent portion, is also mounted on the holding plate 409. This elbow-shaped bent portion normally projects into the stocker 5 and when a disc is there it engages with the engaging notch 205 formed in the right hand edge of the disc near the rear edge of the disc, as shown by the unbroken line in FIG.7; but during disc insertion the spring can bend elastically to the position shown in FIG.7 by a broken line.

A pair of pins 409c are mounted on the holding plate 409, one pin near the front end and one near the rear end, and these pins slidably engage with the inside of the guide slot 406a so that the holding plate 409 can slide along the guide slot 406a. A twist coil spring 411 for pulling in the disc is mounted with one end attached to the pin 409c that is located near the rear end of the holding plate 409 and the other end attached to the central part of the right side wall of the right side support surface 406.

Next, the disc eject mechanism will be described. A second plate-form guide part 412 is mounted between the stocker 5 and the left side support surface 407, perpendicular to the stocker 5. A crank-shaped lever plate 413 is mounted at the rear of the left side support surface 407. The end of the rear side of the lever plate 413 forms a pushing portion 413a which projects into the stocker 5 and pushes on the rear edge of the disc during disc ejection. A shaft 413b is mounted on a curved portion of the front side of this lever plate 413, and the lever plate 413 is mounted on the left side support surface 407 in such way that it can pivot about this shaft 413b.

A pair of guide pins 414 are mounted on the left side support surface 407, one near the front and one in the central part. A connector plate 415 is mounted on the left side support surface 407, a pair of slots 415a are provided in the connector plate 415, and the guide pins 414 are positioned in the slots 415a so that the connector plate can slide forward and backward along the slots 415a, guided by the guide pins 414.

The rear end of the connector plate 415 forms a pushing portion 415b, and this pushing portion 415b abuts with the left hand extremity 413c of the front of the lever plate 413. A twist coil spring 411 is mounted between the rearmost of the two guide pins 414 and the left side extremity 413c of the front of the lever plate 413, and the center of the coil part of this twist coil spring 411 is fitted onto the shaft 413b of the lever plate 413. The elastic action of the spring 411 causes the lever plate 413 to normally be in the position in which it is shown in FIG.8.

Next, the operation of the cartridge holder 3 will be described, with reference to FIGS. 3, 5, and 6.

A disc inserted through the loading slot 212 can be loaded into the stocker 5 by the cartridge holder 3. Also, any one of several discs stocked in the stocker 5 can be selected by the user, and the selected disc can be carried by the cartridge holder 3 to the player 4 and the data recorded on the disc replayed.

When a disc is to be stocked in the stocker 5, the cartridge holder 3 is moved into position facing the loading slot 212 by an elevator mechanism.

The user inserts a disc into the loading slot 212 with the disc oriented such that the slide shutter 204 is on the right. When the disc insertion sensor 216a detects that a disc is being inserted, the rollers 215A and 215B mounted on the cartridge holder 3 are rotated by the roller drive mechanism (not shown in the drawings), and transport the inserted disc into the cartridge holder 3 up to a predetermined holding position. The rollers 215A and 215B are pressed down onto the upper surface of the inserted disc by the action of the springs 326A and 326B.

Next, the cartridge holder 3 is lowered by the cartridge holder 3 and stocker 5 elevator mechanism into position facing one of the disc compartments 50a-50d, and the rollers 215A and 215B rotate again and eject the disc from the cartridge holder 3. When the disc has been ejected from the cartridge holder to a certain extent, the disc pull-in mechanism described above, of which there is one in each of the disc compartments 50a-50d, pulls the disc into the disc compartment up to a predetermined stock position.

When a disc stocked in one of the compartments 50a-50d is to be removed from the loading slot 212, the operation described above is carried out in reverse.

It is noted in connection with the operation of the cartridge holder 3 that because, as shown in FIG. 5, the rollers 215A and 215B are positioned far enough to the left not to make contact with the slide shutter 204, even if the disc on the cartridge holder 3 is a recordable type in which the slide shutter 204 lies over part of both sides of the disc cartridge, the opening and closing action of the slide shutter 204 will not be obstructed by the rollers 215A and 215B. Trouble-free recording and playback of these discs also is therefore possible. Furthermore, while the disc is being transported, problems such as the slide shutter 204 being opened by the rotation of the rollers 215A and 215B and the disc then not being correctly conveyed, or the rollers 215A and 215B then damaging the surface of the disc of a recordable-type MD that has become exposed through the upper access window 203, will not occur. And, even if a disc is somehow mistakenly inserted with the slide shutter 204 open, the disc is transported without any damage being inflicted on either the slide shutter or the recording medium.

It is also noted that if for example the spring 326A on the slide shutter side, i.e. the right side of the cartridge holder, is provided with a greater tension than the left side spring 326B, the rollers 215A will press down on the upper surface of the disc with more force than the rollers 215B and therefor will drive the disc with more force. As a result, the bias in the driving forces on the disc caused by the asymmetrical positioning of the rollers 215A and 215B will be corrected, and the disc will not be turned as it is transported. That is, when the rollers 215A and 215B exert the same driving force on the disc, the driving force exerted on the left side of the disc is strong, the side of the disc on the side of the cartridge holder 3 where the rollers 215B are mounted is subject to a greater driving force than the slide shutter 204 side, and there is the danger that the disc as a whole will turn and become oriented at an angle to the direction in which it is being transported. However, if the construction described above is adopted, this kind of problem will not occur.

Alternatively, if, instead of altering the tension in the springs 326A and 326B, the diameter of the slide shutter 204 side rollers 215A is made greater than the diameter of the left side rollers 215B, turning of the disc during disc transport can be prevented even though the springs 326A and 326B have the same strength. That is, if the diameter of the rollers 215A is made greater than the diameter of the rollers 215B, the large diameter rollers 215A will drive the disc with greater force than the smaller diameter rollers 215B, the bias in the driving forces on the disc caused by the asymmetrical positioning of the rollers 215 will be corrected, and the disc will not be angled with respect to the direction in which it is being transported.

And of course it would also be possible to both alter the tension in the springs 326A, 326B and alter the diameter of the rollers 215A, 215B as well.
And one relatively long roller could be used in place of each pair of rollers 215A, 215B. In this case, when altering the diameter of the rollers, the rollers could be given a tapered form or a stepped form.
And, although in FIG.5 two roller shafts 324 are mounted across the cartridge holder, it would of course be possible to use a single roller shaft or three or more roller shafts instead. And, while in the above description the disc is prevented from turning during disc transport, by the force of the spring 326A being made greater than the force of the spring 326B and/or by the diameter of the roller 215A being made greater than the diameter of 215B, another option is to instead make the disc press hard against the side surface of the right hand guide 322, by reversely making the force of the left side spring 326B greater than the force of the spring 326A and/or by making the diameter of the roller 215B greater than the diameter of the roller 215A.

## Claims

1. A cartridge holder for a recording and playback unit comprising:
a guide for holding a disc cartridge (201) in such way that the disc cartridge (201) can be conveyed in a fixed conveyance direction, the disc cartridge containing a disc (202) chosen from a group comprising optical discs and magnetooptical discs on which data can be stored for performing a desired function and the disc cartridge (201) being provided with an access opening (203) through which the disc (202) can be accessed for the purpose of executing said function and a slide shutter (204) for covering the access opening; and a roller (215) for conveying the disc cartridge (201) in said fixed conveyance direction,
wherein the roller (215) is positioned in such a way that it does not make contact with the slide shutter (204), the the roller (215) comprising a plurality of roller units (215A, 215B); and is oriented perpendicular to said conveyance direction **characterized in that** said roller units (215A, 215B) are positioned asymmetrically on the disc cartridge, the pushing force exerted by said roller units (215A, 215B) on a surface of said disc cartridge (201) varying in a direction perpendicular to said conveyance direction.

2. A cartridge holder according to claim 1, comprising a roller shaft (324) on which the roller (215) is mounted; and at least two spring members (326), at least one spring member being (326) mounted at each end of the roller shaft (324), which urge the roller shaft (324) toward the disc cartridge (201),
wherein the spring force of the spring member (326) on the side nearer the shutter (204) is different than the spring force of the spring member (326) on the side farther from the shutter (204), and as a result the pushing force exerted by the roller (215) on the surface of the disc cartridge (201) varies in a direction perpendicular to the conveyance direction.

3. A cartridge holder according to Claim 1 or Claim 2, in which the diameter of the roller (215) is different on the side nearer the shutter (204) than it is on the side farther from the shutter (204), and as a result the pushing force exerted by the roller (215) on the surface of the disc cartridge (201) varies in a direction perpendicular to the conveyance direction.

4. A cartridge holder according to Claim 1 or Claim 3, **characterized in that** the disc cartridge (201) being pressed hard against the side surface of a right hand guide (322), by reversely making the force of a left side spring (326B) greater than the force of a right hand spring (326A).

## Patentansprüche

1. Diskettenhalter für eine Aufnahme- und Abspielvorrichtung, bestehend aus: einer Führung zum Halten einer Diskette (201) derart, dass die Diskette (201) in einer bestimmten Zuführrichtung zugeführt werden kann, wobei die Diskette eine Platte (202) enthält, die aus der Gruppe optischer Platten und mangnetooptischer Platten gewählt ist, auf der zur Durchführung einer gewünschten Funktion Daten gespeichert werden können und wobei die Diskette (201) eine Zugriffsöffnung (203) aufweist, durch die auf die Platte (202) zur Ausführung der besagten Funktion zugegriffen werden kann, sowie einen Gleitverschluss (203) zur Abdeckung der Zugriffsöffnung; und einer Rolle (215), um die Diskette (201) in der bestimmten Zuführrichtung zuzuführen, wobei die Rolle (215) derart angeordnet ist, dass sie keinen Kontakt zu dem Gleitverschluss (204) hat, wobei die Rolle (215) aus mehreren Rolleinheiten (215A, 215B) besteht und quer zu der Zuführrichtung orientiert ist, **dadurch gekennzeichnet, dass** die Rolleinheiten (215A, 215B) asymmetrisch auf der Diskette positioniert sind, wobei die Schubkraft, die durch die Rolleinheiten (215A, 215B) auf einer Oberfläche der Diskette (201) ausgeübt wird in einer Richtung, die quer zu der Zuführrichtung liegt, unterschiedlich ist.

2. Diskettenhalter nach Anspruch 1, bestehen aus einer Rollenachse (324) auf der die Rolle (215) angeordnet ist; sowie wenigstens zwei Federelementen (326),
wobei wenigstens ein Federelement (326) an den beiden Enden der Rollenachse (324) angeordnet ist, die die Rollenachse (324) auf die Diskette hin mit Druck beaufschlagen,
wobei die Federkraft des Federelements (326) auf der Seite, die dem Verschluss (204) näher ist, anders ist, als die Federkraft des Federelements (326) auf der Seite, die weiter weg von dem Verschluss (204) ist, woraus sich ergibt, dass die Schubkraft, die durch die Rolle (215) auf die Oberfläche der Diskette (201) ausgeübt wird, in einer Richtung quer zu der Zuführrichtung unterschiedlich ist.

3. Diskettenhalter nach Anspruch 1 oder 2, wobei der Durchmesser der Rolle (215) auf der Seite, die dem Verschluss (204) näher ist, anders ist, als der Durchmesser der Rolle (215) auf der Seite, die weiter weg von dem Verschluss (204) ist, woraus sich ergibt, dass die Schubkraft, die durch die Rolle (215) auf die Oberfläche der Diskette (201) ausgeübt wird, in einer Richtung quer zu der Zuführrichtung unterschiedlich ist.

4. Diskettenhalter nach Anspruch 1 oder 3, **dadurch gekennzeichnet, dass** die Diskette (201) hart gegen die Seitenfläche einer rechten Führung (322) gepresst wird, indem umgekehrt die Kraft einer linken Feder (326B) größer gemacht wird, als die Kraft einer rechten Feder (326A).

## Revendications

1. Support de cartouche pour une unité d'enregistrement et de reproduction comprenant :
un guide pour maintenir une cartouche (201) de disque de telle façon que la cartouche de disque (201) peut être convoyée dans une direction fixée de convoyage, la cartouche de disque contenant un disque (202) choisi parmi le groupe comprenant des disques optiques et des disques magnéto optiques sur lesquels des données peuvent être stockées pour effectuer une fonction désirée, et la cartouche (201) de disque comportant une ouverture d'accès (203) à travers laquelle on peut accéder au disque (202) afin d'exécuter ladite fonction et un volet coulissant (204) pour recouvrir l'ouverture d'accès ; et un rouleau (215) pour convoyer la cartouche (201) de disque dans ladite direction fixée de convoyage, dans lequel le rouleau (215) est positionné de telle manière qu'il ne vient pas en contact avec le volet coulissant (204), le rouleau (215) comprenant une pluralité de rouleaux unitaires (215A, 215B) et étant orienté perpendiculairement à ladite direction de convoyage, **caractérisé en ce que** lesdits rouleaux unitaires (215A, 215B) sont positionnés de façon asymétrique sur la cartouche de disque, la force de poussée exercée par lesdits rouleaux unitaires (215A, 215B) sur une surface de ladite cartouche de disque (201) variant dans une direction perpendiculaire à ladite direction de convoyage.

2. Support de cartouche selon la revendication 1, comprenant un arbre de rouleau (324) sur lequel le rouleau (215) est monté ; et au moins deux organes élastiques (326), au moins un organe élastique (326) étant monté à chaque extrémité de l'arbre de rouleau (324), qui presse l'arbre de rouleau (324) en direction de la cartouche (201) de disque,
dans lequel la force élastique de l'organe élastique (326) sur le côté le plus proche du volet (204) est différente de la force élastique de l'organe élastique (326) sur le côté le plus éloigné du volet (204), et en conséquence la force de poussée exercée par le rouleau (215) sur la surface de la cartouche (201) de disque varie dans une direction perpendiculaire à la direction de convoyage.

3. Support de cartouche selon la revendication 1 ou la revendication 2, dans lequel le diamètre du rouleau (215) est différent sur le côté le plus proche du volet (204) de celui qui se trouve sur le côté le plus éloigné du volet (204), et en conséquence la force de poussée exercée par le rouleau (215) sur la surface de la cartouche (201) de disque varie dans une direction perpendiculaire à la direction de convoyage.

4. Support de cartouche selon la revendication 1 ou la revendication 3, **caractérisé en ce que** la cartouche (201) de disque est fortement pressée contre la surface latérale d'un guide situé à droite (322), en rendant inversement la force du ressort situé du côté gauche (326B) supérieure à la force du ressort situé à droite (326A).
